# EUROPÄISCHE PATENTSCHRIFT

(11) **EP 0 970 291 B1**
(45) Veröffentlichungstag und Bekanntmachung des Hinweises auf die Patenterteilung: **17.07.2002**
(21) Anmeldenummer: 98917056.8
(22) Anmeldetag: 23.03.1998
(51) Int. Cl.: F01B 3/00, F04B 1/12

(54) **VERFAHREN ZUM HERSTELLEN EINER KUGELGELENKVERBINDUNG**
METHOD FOR THE PRODUCTION OF A BALL JOINTED CONNECTION
PROCEDE DE PRODUCTION D'UNE ARTICULATION A JOINT SPHERIQUE

(30) Priorität: 26.03.1997 DE 19712838; 22.04.1997 DE 19716880
(43) Veröffentlichungstag der Anmeldung: 12.01.2000
(60) Teilanmeldung: 01116065.2
(73) Patentinhaber: BRUENINGHAUS HYDROMATIK GMBH, 89275 Elchingen (DE)
(72) Erfinder: HÜHN, Bernd, D-89275 Elchingen (DE); LOTTER, Manfred, D-89231 Neu-Ulm (DE); KUNZE, Thomas, D-89297 Roggenburg (DE); STÖLZER, Rainer, D-89291 Neu-Ulm (DE)
(74) Vertreter: Körfer, Thomas, Dipl.-Phys.
(86) Internationale Anmeldenummer: EP9801687
(87) Internationale Veröffentlichungsnummer: WO9842949

(56) Entgegenhaltungen:
- EP-A- 0 371 834
- DE-A- 2 132 252
- DE-A- 3 406 782

## Beschreibung

Die Erfindung betrifft ein Verfahren zum Herstellen einer Kugelgelenkverbindung zwischen einem Gleitschuh und einem Zylinderkolben einer Kolbenmaschine, insbesondere einer Axialkolbenmaschine.

Bei Axialkolbenmaschinen in Schrägscheibenbauweise stützen sich die in Zylinderbohrungen bewegbaren Zylinderkolben über jeweils einen Gleitschuh an der Gleitfläche einer Schrägscheibe ab. Dabei ist es üblich, die Zylinderkolben mit den Gleitschuhen mittels einer Kugelgelenkverbindung zu verbinden, um in jeder Schrägstellung der Schrägscheibe eine flächige Anlage der Gleitsohle der Gleitschuhe an der Gleitfläche der Schrägscheibe zu gewährleisten.

Bei der Herstellung der Kugelgelenkverbindung ist es weitgehend üblich, den an dem Gleitschuh oder dem Zylinderkolben angeformten Kugelkopf in eine abgerundete Ausnehmung des entsprechenden Gegenstücks, also des Zylinderkolbens bzw. Gleitschuhs, einzusetzen. Die Ausnehmung ist dabei nur in einem Raumwinkelbereich von etwa 180° als Halb-Hohlkugel abgerundet. An diesem halbkugelförmigen Bereich der Ausnehmung schließt sich ein hohlzylinderförmiger Bereich an, der an einer Öffnung ausmündet. Der Öffnungsdurchmesser an der Öffnung der Ausnehmung entspricht dem Durchmesser im Bereich der Äquatorebene des halb-hohlkugelförmigen Bereichs der Ausnehmung. Beim Zusammenfügen des Gleitschuhs und des Zylinderkolbens wird der an einem der beiden Teile angeformte Kugelkopf in die Ausnehmung eingeführt und in der Ausnehmung formschlüssig verankert. Dies ist notwendig, damit über die Kugelgelenkverbindung während des Saughubs der Kolbenmaschine eine entsprechende Zugkraft übertragbar ist.

Bei einem gängigen Verfahren zur Verbindung des Kugelkopfs mit der korrespondierenden Ausnehmung wird nach Einführen des sphärischen Kugelkopfs der den Kugelkopf im Bereich der Öffnung der Ausnehmung umgebende Randbereich, z. B. mittels Walzen, umgebördelt. Ein solches Verfahren geht beispielsweise aus der DE-OS 1 776 027 hervor. Aus der DE-AS 21 32 252 ist es dagegen bekannt, daß zur Verankerung des Kugelkopfes des Gleitschuhs in der Ausnehmung des Zylinderkolbens ein Sperring eingesetzt wird, der sich gegen eine Innenfläche der Ausnehmung abstützt. Die beiden vorstehend genannten Verfahren sind relativ aufwendig und in der Serienfertigung mit relativ hohen Fertigungsund Montagekosten verbunden.

Die plastische Verformung des Zylinderkolbens in dem die kalottenförmige Ausnehmung umgebenden Randbereich ist insofern mit Nachteilen behaftet, als der Kolben z. B. durch Nitrieren und eine Wärmebehandlung einer speziellen Härtung unterworfen wird, um die Verschleißfestigkeit zu verbessern. Diese Härtung steht jedoch einer nachfolgenden plastischen Verformung entgegen, so daß der die kalottenförmige Ausnehmung umgebende Bereich von der Wärmebehandlung ausgespart werden muß, was einen erheblichen Mehraufwand bedeutet. Ferner besteht das Problem, daß die zur Verformung des in der Regel aus Stahl gefertigten Zylinderkolbens erforderliche hohe Preßkraft zu einer unerwünschten Mitverformung des zur Verbesserung der Gleiteigenschaften aus einer Kupfer- oder Bronzelegierung bestehenden Kugelkopfes des Gleitschuhs führt. In der Praxis ist es daher erforderlich, den Gleitschuh zweiteilig mit einem aus einer Kupferoder Bronzelegierung gefertigten Gleitteil und einer in dieses eingesetzten Stahlkugel auszubilden.

In jedem Fall ist für die Umbördelung ein zusätzlicher, aufwendiger Arbeitsschritt erforderlich. Das Einsetzen eines Sperrings zur Verriegelung des Kugelkopfes erhöht die Anzahl der für die Montage notwendigen Teile und hat sich aufgrund des hohen Montageund Fertigungsaufwands in der Praxis nicht bewährt.

Aus der DE 42 14 765 A1 ist es bekannt, den Kugelkopf der Gleitschuhe mit einer bezüglich der Längsachse der Gleitschuhe abgewinkelten Abflachung zu versehen. Nach Einsetzen des Kugelkopfs in die Ausnehmung des Zylinderkolbens ist es möglich, den Kugelkopf in der Ausnehmung so zu verkanten, daß dieser aus der Ausnehmung nicht herausgezogen werden kann. Dieses Verfahren hat jedoch den Nachteil, daß die Grenzfläche zwischen dem Kugelkopf des Gleitschuhs und der Ausnehmung des Zylinderkolbens im Bereich der Kanten des Kugelkopfs einem erhöhten Verschleiß unterworfen ist. Ferner ist die Auflagefläche durch die Abflachung deutlich verringert. Des weiteren ist der Schwenkwinkel, welchen die Schrägscheibe gegenüber der Zylindertrommel einnehmen kann, erheblich begrenzt. Dieses Verfahren ist insbesondere bei Axialkolbenmaschinen mit in beiden Schwenkrichtungen verschwenkbaren Schrägscheiben nicht anwendbar.

Der Erfindung liegt daher die Aufgabe zugrunde, ein Verfahren zum Herstellen einer Kugelgelenkverbindung zwischen einem Gleitschuh und einem Zylinderkolben einer Kolbenmaschine anzugeben, welches eine rationelle und kostengünstige Serienfertigung ermöglicht.

Die Aufgabe wird durch die Merkmale des Anspruchs 1 gelöst.

Der Lösung nach Anspruch 1 liegt die Erkenntnis zugrunde, daß die Kugelgelenkverbindung auch dadurch kostengünstig und einfach herstellbar ist, daß der Kugelkopf zunächst mit einer Abflachung ausgebildet ist, um den Kugelkopf in die hinterschnittene Ausnehmung einzuführen. Nach dem Einführen des Kugelkopfes wird. dieser plastisch verformt. Im Unterschied zu der aus dem Stand der Technik bekannten Umbördelung ist es dabei vorteilhaft, wenn der Kugelkopf aus einem leicht verformbaren Material, z. B. einer Kupfer- oder Bronzelegierung, die üblicherweise zur Ausbildung der Gleitschuhe verwendet wird, besteht. Ferner ist es vorteilhaft, wenn die die Matrize bildende Ausnehmung in einem gehärteten Material ausgebildet ist, so wie dies üblicherweise für Zylinderkolben verwendet wird. Eine plastische Verformung des Kugelkopfes ist daher an die gegebenen Materialeigenschaften besser angepaßt, als das aus den Stand der Technik bekannte Umbördeln des Randbereichs der Ausnehmung.

Die Ansprüche 2 bis 7 betreffen vorteilhafte Weiterbildungen der Lösung nach Anspruch 1.

Nach Anspruch 5 kann der Kugelkopf von einer Längsbohrung durchsetzt sein, die zur plastischen Verformung des Kugelkopfes mit einem flüssigen oder gasförmigen Druckmedium beaufschlagt wird, um den Werkstoff des Kugelkopfes radial zu verdrängen. Alternativ kann das Material jedoch auch mittels eines in die Längsbohrung eingeführten Stemmdorns gemäß Anspruch 6 verdrängt werden. Dabei ist es vorteilhaft, wenn die Längsbohrung entsprechend Anspruch 7 einen innenseitigen Überstand aufweist, der gemäß der Weiterbildung nach Anspruch 4 beim Verformen des Kugelkopfes mitgeformt werden kann.

Nachfolgend werden Ausführungsbeispiele der Erfindung unter Bezugnahme auf die Zeichnung näher beschrieben. In der Zeichnung zeigen
- Fig. 1A: eine Prinzipdarstellung eines zur Ausführung des erfindungsgemäßen Verfahrens vorbereiteten Zylinderkolbens;
- Fig. 1B: eine Prinzipdarstellung der fertigen Kugelgelenkverbindung mit einem gleitschuhseitigen Kugelkopf, der in eine zylinderkolbenseitige Ausnehmung eingreift;
- Fig. 2: eine Prinzipdarstellung einer fertigen Kugelgelenkverbindung mit einem zylinderkolbenseitigen Kugelkopf, die in eine gleitschuhseitige Ausnehmung eingreift;
- Fig. 3A: einen für das erfindungsgemäße Verfahren vorbereiteten Gleitschuh entsprechend einem ersten Ausführungsbeispiel;
- Fig. 3B: einen für das erfindungsgemäße Verfahren vorbereiteten Zylinderkolben entsprechend dem ersten Ausführungsbeispiel;
- Fig. 3C: die Verbindung des in Fig. 3A dargestellten Gleitschuhs mit dem in Fig. 3B dargestellten Zylinderkolben;
- Fig. 3D: einen vorgefertigten Gleitschuh mit einer Rollvorrichtung zum Umformen des Gleitschuhs in eine der Fig. 3A entsprechenden Form;
- Fig. 4A: einen für das erfindungsgemäße Verfahren vorbereiteten Gleitschuh entsprechend einem zweiten Ausführungsbeispiel;
- Fig. 4B: einen für das erfindungsgemäße Verfahren vorbereiteten Zylinderkolben entsprechend dem zweiten Ausführungsbeispiel; und
- Fig. 4C: die Verbindung des in Fig. 4A dargestellten Gleitschuhs mit dem in Fig. 4B dargestellten Zylinderkolben.

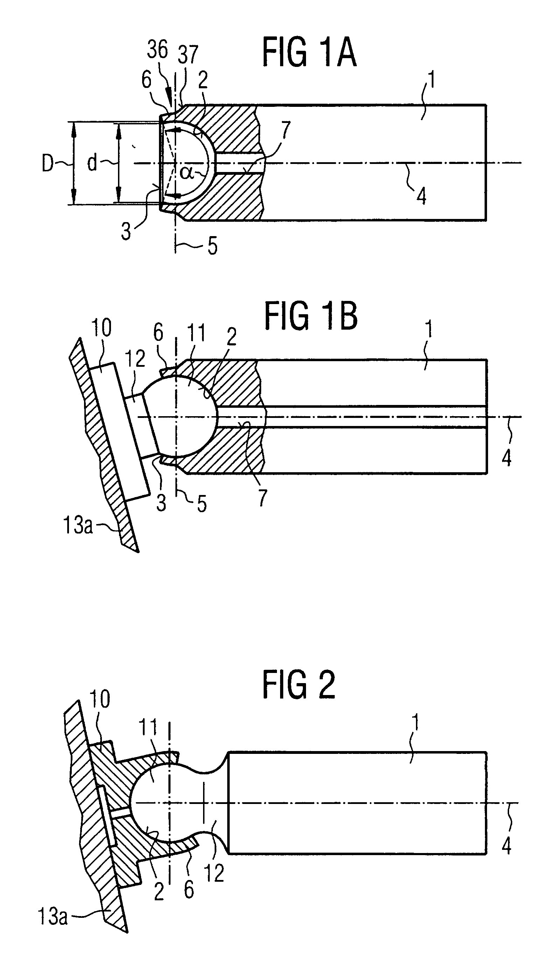

Fig. 1A zeigt eine Prinzipdarstellung eines zur Durchführung des erfindungsgemäßen Verfahrens vorbereiteten Zylinderkolbens 1. Der Zylinderkolben 1 ist in an sich bekannter Weise in einer Zylinderbohrung der Kolbenmaschine, die bei einer Axialkolbenmaschine in Schrägscheibenbauweise z. B. in einer rotierenden Zylindertrommel angeordnet ist, bewegbar.

Der Zylinderkolben 1 weist an einem seiner Enden eine sphärische, kalottenförmige bzw. teilkugelförmige Ausnehmung 2 auf. Die kalottenförmige Ausnehmung 2 ist an der Stirnseite des Zylinderkolbens 1 an einer Öffnung 3 geöffnet. Erfindungswesentlich ist die Ausnehmung 2 dabei so hinterschnitten, daß die kalottenförmige Ausnehmung 2 einen Raumwinkelbereich von mehr als 180° umfaßt (α > 180°). Anders ausgedrückt ist der Durchmesser d der Öffnung 3 kleiner bemessen als der Durchmesser D der Ausnehmung 2 im Bereich der sich senkrecht zu der Längsachse 4 erstreckenden Äquatorebene 5. Zur Verdeutlichung sind der Öffnungsdurchmesser d und der Durchmesser D der Ausnehmung 2 im Bereich der Äquatorebene 5 in Fig. 1A eingezeichnet. Zwischen der Äquatorebene 5 und der Öffnung 3 weist die kalottenförmige Ausnehmung 2 einen Randbereich 6 auf. Der Zylinderkolben 1 kann homogen aus einem elastischen, schwer verformbaren Material, insbesondere mittels einer Wärmebehandlung aus nitriertem Stahl gefertigt sein. Im Gegensatz zu dem aus dem Stand der Technik bekannten Umbördelungsverfahren kommt es bei dem erfindungsgemäßen Verfahren nicht auf die plastische Verformbarkeit des Randbereichs 6 an. Der Zylinderkolben 1 kann bei der Nitrierung daher einer homogenen, gleichmäßigen Wärmebehandlung unterworfen werden, ohne daß der Randbereich 6 der Ausnehmung 2 von dieser Behandlung ausgenommen werden muß und ein dafür notwendiger Mehraufwand notwendig würde.

Die kalottenförmige Ausnehmung 2 ist in an sich bekannter Weise über eine Längsbohrung 7 mit der nicht dargestellten Zylinderbohrung der Kolbenmaschine verbunden, um über eine in dem zugehörigen Gleitschuh ebenfalls vorgesehene Längsbohrung einen Druckmittelfluß zu der Gleitsohle des Gleitschuhs zu ermöglichen und so eine Schmierwirkung und eine hydraulische Entlastung zu bewirken.

Fig. 1B zeigt in einer Prinzipdarstellung den fertigen Montagezustand des an einem Gleitschuh 10 über einen Kragenabschnitt 12 angeformten Kugelkopfes 11 in der kalottenförmigen Ansnehmung 2 des Zylinderkolbens 1. Der Gleitschuh 10 stützt sich an einer nur teilweise dargestellten Schrägscheibe 13a ab.

Fig. 2 zeigt ein prinzipielles Ausführungsbeispiel einer mit dem nachstehend beschriebenen Verfahren herstellbar umgekehrten Kugelenkverbindung, wobei der Kugelkopf 11 über einen Halsabschnitt 12 an dem Zylinderkolben 1 angeformt ist und die kalottenförmige, sphärische Ausnehmung 2 an dem Gleitschuh 10 vorgesehen ist. Das nachstehend genauer beschriebene erfindungsgemäße Verfahren eignet sich für eine derart ausgebildete Kugelgelenkverbindung in gleicher Weise.

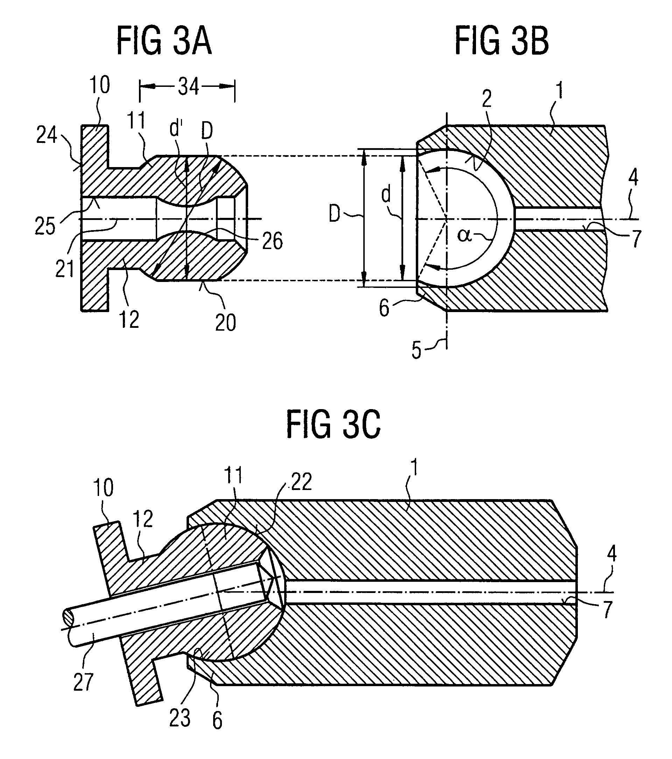

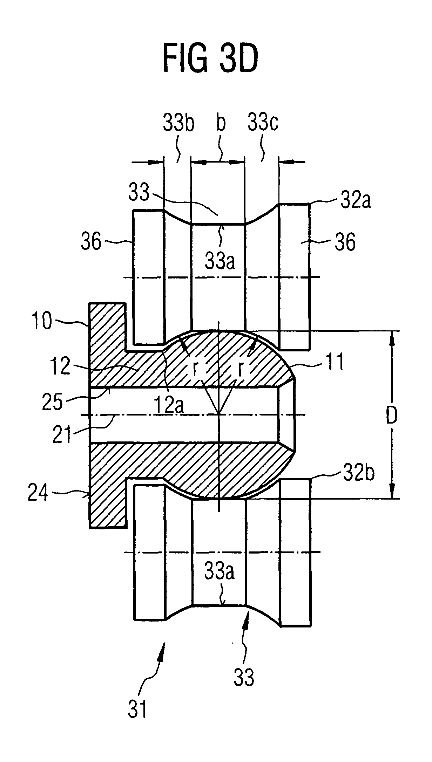

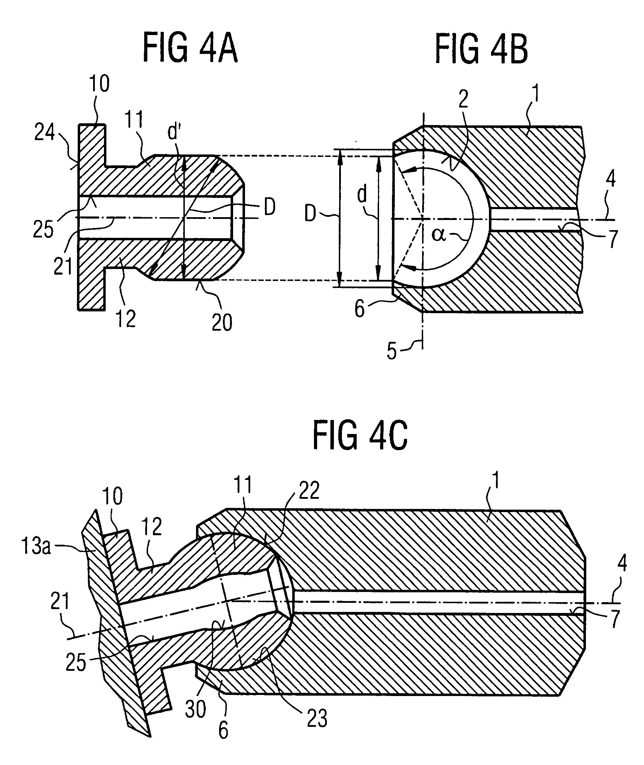

Die Fig. 3A bis 3C sowie 3D einerseits und die Fig. 4A bis 4C andererseits zeigen zwei Ausführungsbeispiele des erfindungsgemäßen Verfahrens. Soweit möglich werden mit den Fig. 1A bis 1B übereinstimmende Bezugszeichen verwendet.

Der Zylinderkolben 1 ist, wie aus den Figuren 3B und 4B zu erkennen, in gleicher Weise wie in Fig. 1A ausgebildet. Die sphärische, kalottenförmige Ausnehmung 2 ist auch bei diesen Ausführungsbeispielen hinterschnitten, so daß die kalottenförmige Ausnehmung 2 einen Raumwinkelbereich α von mehr als 180° umfaßt (α > 180°). Der Durchmesser D im Bereich der Äquatorebene 5 ist daher größer bemessen als der Öffnungsdurchmesser d der Ausnehmung 2. Auf der Seite des Zylinderkolbens 1 besteht daher kein wesentlicher Unterschied zu dem bereits anhand der Figuren 1A und 1B erläuterten Prinzipdarstellung.

Der an dem in den Fig. 3A, 4D und 4A dargestellten Gleitschuh 10 angeformte Kugelkopf 11 weist eine um die Längsachse 21 des Gleitschuhs 10 umlaufende Abflachung 20 auf, deren Durchmesser d' mit dem Öffnungsdurchmesser d der Ausnehmung 2 entweder in etwa übereinstimmt oder kleiner als der Öffnungsdurchmesser d bemessen ist. Der Kugelkopf 11 läßt sich daher in die Ausnehmung 2 ohne weiteres einführen. Nachdem der Kugelkopf 11 die Ausnehmung 2 eingeführt ist, wird dieser plastisch so verformt, daß die Abflachung 20 beseitigt wird und die aus Fig. 3C und 4C ersichtliche Außenoberfläche 22 des Kugelkopfes 11 an die sphärische Innenoberfläche 23 der kalottenförmigen Ausnehmung 2 angepaßt ist. Die Fig. 3C und 4C zeigen den ausgeformten Endzustand des in die Ausnehmung 2 eingesetzten Kugelkopfes 11.

Bei dem in den Fig. 3A bis 3C sowie 3D dargestellten Ausführungsbeispiel weist eine für die Zuleitung des Druckmediums an die Gleitsohle 24 des Gleitschuhs 10 ohnehin benötigte Längsbohrung 25 eine Verengung in Form eines innenseitigen Überstands 26 auf. Durch Einführen eines in Fig. 3C dargestellten Stemmdorns 27 in die Längsbohrung 25 des Gleitschuhes 10 wird der Werkstoff des Kugelkopfes 11 radial nach außen verdrängt, bis die Abflachung 20 beseitigt ist und die Außenoberfläche 22 des Kugelkopfes 11 an die Innen-Oberfläche 23 der kalottenförmige Ausnehmung 2 angepaßt ist. Dabei ist der Werkstoff des Kugelkopfes 11 vorzugsweise ein weicheres, leichter verformbareres Material als der Werkstoff des die Ausnehmung 2 umgebenden Randbereichs 6. Der die Ausnehmung 2 umgebende Randbereich 6 des Zylinderkolbens 1 wirkt dabei als Matrize für die Verformung des Kugelkopfes 11. Wie bereits vorstehend beschrieben, besteht der Gleitschuh aufgrund der zu fordernden Gleiteigenschaften ohnehin aus einem weicheren, verformbareren Material, z. B. einer Kupfer- oder Bronzelegierung, als der aus einem gehärteten, z. B. nitrierten, Stahl bestehende Zylinderkolben 1. Die Verformung des Kugelkopfes 11 ist daher an die gegebenen Materialverhältnisse wesentlich besser angepaßt, als die aus dem Stand der Technik, z. B. in Form einer Umbördelung bekannte plastische Verformung des die kalottenförmige Ausnehmung 2 umgebenden Rundbereichs 6.

Die in Fig. 3D allgemein mit 31 bezeichnete Rollvorrichtung dient dazu, die Abflachung 20 spanlos und kalt am vorher runden Kugelkopf 11 anzuformen, nämlich durch Rollen mit der Rollvorrichtung 31, die wenigstens zwei bezüglich des Kugelkopfes 11 einander diametral gegenüberliegende Rollen 32a, 32b aufweist, die vorzugsweise einander gleich ausgebildet sind und an ihrer Mantelfläche jeweils eine Ringausnehmung 33 aufweisen, deren konkave Form der konvexen Form der in Fig. 3A mit 34 bezeichneten Kugelzone umgekehrt entspricht. Die Rollen 32a, 32b weisen folglich jeweils einen zylindrischen Mantelflächenteil 33a auf, dessen Breite b der Breite der Abflachung 20 entspricht. An diesen zylindrischen Mantelflächenteil 33a schließen sich zwei axial einander spiegelbildlich divergent und dabei kreisbogenabschnittsförmig gekrümmte Mantelflächenteile 33b, 33c als Rotationsflächen der zugehörigen Rolle an, deren Radius r dem Radius des Kugelkopfes 11 entspricht und deren Breite so groß bemessen ist, daß bei der Umformung des Kugelkopfes 11 die Kugelform neben den Rollen 32a, 32b aufgrund des von den Mantelflächenteilen aufgebrachten Gegendruckes nicht verformt und somit beibehalten wird. Bei der vorliegenden Ausgestaltung erstreckt sich der dem First des Kugelkopfes zugewandte Mantelflächenteil 33c über einen Winkelbereich von etwa 5 bis 10° oder bis in die Nähe des Randes der Längsbohrung 25. Der dem Kragenabschnitt 12 zugewandte Mantelflächenteil 33b erstreckt sich bis zur Nähe oder bis in die Übergangskante 12a zwischen dem Kragenabschnitt 12 und der Kugelfläche. An die Mantelflächenteile 33b, 33c schließen sich axial zylindrische Mantelflächenteile 36 mit einer Breite von ein paar Millimetern an.

Die Rollen 32a, 32b sind durch einen nicht dargestellten Mechanismus bezüglich Ihres Achsabstandes verstellbar, und außerdem ist ein nicht dargestellter Antrieb vorgesehen, der eine Relativbewegung zwischen dem Kugelkopf 11 bzw. Gleitschuh 10 einerseits und den Rollen 32a, 32b andererseits erzeugt. Dabei ist es möglich, den Kugelkopf 11 bzw. Gleitschuh 10 oder die Rollen 32a, 32b als Einheit um die Längsachse 21 zu drehen. Beim so stattfindenden Roll-Vorgang wird der Achsabstand zwischen den Rollen 32a, 32b durch eine ebenfalls nicht dargestellte Einstellvorrichtung soweit verringert, bis dazwischen die gewünschte abgeflachte Form des Kugelkopfes 11 erreicht ist. Hierbei wird durch die Materialverformung der innenseitige Überstand 26 (s. Fig. 3A) gleichzeitig ausgewölbt. Der vorbeschriebene Roll-Vorgang ist mit einem Walz-Vorgang vergleichbar und kann somit auch als Walz-Vorgang bezeichnet werden. Dies gilt auch für die Rollen 32a, 32b, die als Walzen bzw. Formwalzen bezeichnet werden können. Es ist im Rahmen der Erfindung auch möglich, den Überstand 26 in anderer Weise herzustellen.

Die Um- bzw. Rückformung des Kugelkopfes nach Fig. 3D zwecks Beseitigung der Abflachung 20 erfolgt in entsprechender Weise, wie es anhand der Fig. 3C bereits beschrieben worden ist. Im Rahmen der Erfindung ist es auch möglich, einen am Zylinderkolben 1 angeordneten Kugelkopf 11 entsprechend umzuformen und rückzuformen.

Die Figuren 4A bis 4C zeigen ein weiteres Ausführungsbeispiel des erfindungsgemäßen Verfahrens. Im Unterschied zu dem in Fig. 3A gezeigten Kugelkopf 11 weist der in Fig. 4A dargestellte Kugelkopf 11 den innenseitigen Überstand 26 nicht auf. In entsprechender Weise weist die Längsbohrung 25 des Gleitschuhs 10 nach der in Fig. 4C dargestellten Verformung eine entsprechende radiale Erweiterung 30 auf. Die Verformung kann bei diesem Ausführungsbeispiel durch einen nicht dargestellten Spreizdorn oder aber durch ein gasförmiges, vorzugsweise flüssiges Druckmedium erzielt werden, mit welchem die Längsbohrung 25 des Gleitschuhs 10 des Kugelkopfes 11 beaufschlagt wird. Die radiale Verformung kann aber auch durch einen axialen Stauvorgang des Kugelkopfes 11 erreicht werden.

Die Verfahren nach den Fig. 3A bis 3D und nach den Fig. 4A bis 4C können selbstverständlich auch ohne weiteres miteinander kombiniert werden. Selbstverständlich kann das Verfahren in gleicher Weise auch dann zur Anwendung kommen, wenn der Kugelkopf 11 an den Zylinderkolben 1 und die sphärische, kalottenförmige Ausnehmung 2 an dem Gleitschuh 10 ausgebildet sind. Das erfindungsgemäße Verfahren ist insbesondere dann bevorzugt anwendbar, wenn der Zylinderkolben 1 aus Stahl und der Gleitschuh 10 aus einer Buntmetall-Legierung besteht.

Die vorliegende Erfindung ist nicht auf die dargestellten Ausführungsbeispiele begrenzt. Es sind eine Vielzahl weiterer Möglichkeiten zur plastischen Verformung des Kugelkopfes 11 denkbar.

## Patentansprüche

1. Verfahren zum Herstellen einer Kugelgelenkverbindung zwischen einem Gleitschuh (10) und einem Zylinderkolben (1) einer Kolbenmaschine mit folgenden Verfahrensschritten:
- Formen einer sphärischen, kalottenförmigen Ausnehmung (2) an dem Zylinderkolben (1) bzw. dem Gleitschuh (10), wobei die Ausnehmung (2) so hinterschnitten ist, daß die kalottenförmige Ausnehmung (2) einen Raumwinkelbereich (α) von mehr als 180° umfaßt und der Durchmesser (D) im Bereich der Äquatorebene (5) größer ist als der Öffnungsdurchmesser (d) der Ausnehmung (2),
- Vorformen eines sphärischen Kugelkopfes (11) an dem Gleitschuh (10) bzw. dem Zylinderkolben (1), so daß der Kugelkopf (11) parallel zu seiner Längsachse (21) eine Abflachung (20) aufweist und der Durchmesser (d') im Bereich der Abflachung (20) kleiner oder annähernd gleich dem Öffnungsdurchmesser (d) der kalottenförmigen Ausnehmung (2) ist,
- Einführen des Kugelkopfes (11) in die Ausnehmung (2), und
- plastisches Verformen des Kugelkopfes (11) bis die Abflachung (20) des Kugelkopfes (11) beseitigt ist und die Außen-Oberfläche (22) des Kugelkopfes (11) an die sphärische Innen-Oberfläche (23) der kalottenförmigen Ausnehmung (2) angepaßt ist.

2. Verfahren nach Anspruch 1,
**dadurch gekennzeichnet,**
**daß** der Kugelkopf (11) beim Vorformen in seine die Abflachung (20) aufweisende Form spanlos und/oder kalt verformt wird.

3. Verfahren nach Anspruch 1 oder 2,
**dadurch gekennzeichnet,**
**daß** der Kugelkopf (11) durch Rollen in seine die Abflachung (20) aufweisende Form verformt wird.

4. Verfahren nach Anspruch 2 oder 3,
**dadurch gekennzeichnet,**
**daß** beim Vorformen des Kugelkopfes (11) durch den dabei stattfindenden Materialfluß ein innenseitiger Überstand (26) in einer Längsbohrung (25) geformt wird.

5. Verfahren nach einem der Ansprüche 1 bis 4,
**dadurch gekennzeichnet,**
**daß** der Kugelkopf (11) von einer oder der Längsbohrung (25) durchsetzt ist, die zur plastischen Verformung des Kugelkopfes (11) mit einem flüssigen oder gasförmigen Druckmedium beaufschlagt wird, um den Werkstoff des Kugelkopfes (11) radial zu verdrängen.

6. Verfahren nach Anspruch 4 oder 5,
**dadurch gekennzeichnet,**
**daß** der Kugelkopf (11) von einer oder der Längsbohrung (25) durchsetzt ist, in die zur plastischen Verformung des Kugelkopfes (11) ein Stemmdorn (27) eingeführt wird, welcher den Werkstoff der Kugelkopfes (11) radial verdrängt.

7. Verfahren nach Anspruch 6,
**dadurch gekennzeichnet,**
**daß** die Längsbohrung (25) einen oder den innenseitigen Überstand (26) aufweist, welcher durch den Stemmdorn (27) radial verdrängt wird.

8. Verfahren nach einem der Ansprüche 1 bis 7,
**dadurch gekennzeichnet,**
**daß** der Kugelkopf (11) durch ein axiales Stauchen des Kugelkopfes (11) plastisch verformt wird.

## Claims

1. Method of manufacturing a ball-joint connection between a sliding block (10) and a cylinder piston (1) of a piston machine, the said method comprising the following steps:
- the forming of a spherical, cap-shaped recess (2) on the cylinder piston (1) or on the sliding block (10), the said recess (2) being undercut in such a way that the cap-shaped recess (2) encompasses a solid-angle region (a) of more than 180° and the diameter (D) in the region of the equatorial plane (5) is greater than the diameter (d) of the opening of the recess (2),
- the preforming of a spherical ball head (11) on the sliding block (10) or on the cylinder piston (1), so that the ball head (11) has a flattened portion (20) parallel to its longitudinal axis (21) and the diameter (d') in the region of the said flattened portion (20) is smaller than, or approximately equal to, the diameter (d) of the opening of the cap-shaped recess (2),
- the introduction of the ball head (11) into the recess (2), and
- the plastic deformation of the ball head (11) until its flattened portion (20) is eliminated and the external surface (22) of the said ball head (11) is adapted to the spherical internal surface (23) of the cap-shaped recess (2).

2. Method according to claim 1,
**characterised in that**,
during the preforming operation, the ball head (11) is deformed in a non-cutting and/or cold manner into its shape having the flattened portion (20).

3. Method according to claim 1 or 2,
**characterised in that**
the ball head (11) is deformed into its shape having the flattened portion (20) by rolling.

4. Method according to claim 2 or 3,
**characterised in that,**
during the preforming of the ball head (11), an internal projection (26) is formed in a longitudinal bore (25) as a result of the flow of material that takes place in the process.

5. Method according to one of claims 1 to 4,
**characterised in that**
the ball head (11) has, passing through it, a longitudinal bore (25) or the longitudinal bore (25), which is acted upon, for the purpose of plastically deforming the said ball head (11), by a liquid or gaseous pressure medium in order to displace the material of the latter radially.

6. Method according to claim 4 or 5,
**characterised in that**
the ball head (11) has, passing through it, a longitudinal bore (25) or the longitudinal bore (25), into which a caulking mandrel (27), which displaces the material of the ball head (11) radially, is introduced for the purpose of plastically deforming the said ball head (11).

7. Method according to claim 6,
**characterised in that**
the longitudinal bore (25) has an internal projection (26), or the internal projection (26), which is radially displaced by the caulking mandrel (27).

8. Method according to one of claims 1 to 7,
**characterised in that**
the ball head (11) is plastically deformed by axial upsetting of the said ball head (11).

## Revendications

1. Procédé de production d'une liaison articulée à joint sphérique entre un sabot coulissant (10) et un piston (1) d'un groupe à pistons, comprenant les étapes suivantes :
- on forme une cavité sphérique en forme de calotte (2) sur le piston (1) ou sur le sabot coulissant (10), la cavité (2) étant en contre-dépouille telle que la cavité (2) en forme de calotte comprend une zone angulaire dans l'espace (α) de plus de 180° et que le diamètre (D) dans la zone du plan équatorial (5) est supérieur au diamètre d'ouverture (d) de la cavité (2),
- on préforme une tête sphérique (11) sur le sabot coulissant (10) ou sur le piston (1), de sorte que la tête sphérique (11) présente un méplat (20) parallèlement à son axe longitudinal (21), et que le diamètre (d') dans la zone du méplat (20) est inférieur ou approximativement égal au diamètre d'ouverture (d) de la cavité en forme de calotte (2),
- on introduit la tête sphérique (11) dans la cavité (2), et
- on déforme plastiquement la tête sphérique (11) jusqu'à ce que le méplat (20) de la tête sphérique (11) soit éliminé et que la surface extérieure (22) de la tête sphérique (11) soit adaptée à la surface intérieure sphérique (23) de la cavité en forme de calotte (2).

2. Procédé selon la revendication 1, **caractérisé en ce que** l'on déforme la tête sphérique (11) sans enlèvement de matière et/ou à froid lors du préformage vers sa forme présentant le méplat (20).

3. Procédé selon une ou l'autre des revendications 1 et 2, **caractérisé en ce que** l'on déforme la tête sphérique (11) par galetage vers sa forme présentant le méplat (20).

4. Procédé selon l'une ou l'autre des revendications 2 et 3, **caractérisé en ce que** lors du préformage de la tête sphérique (11), un dépassement (26) côté intérieur dans un perçage longitudinal (25) est formé par le flux de matière qui se produit alors.

5. Procédé selon l'une des revendications 1 à 4, **caractérisé en ce que** la tête sphérique (11) est traversée par un ou par le perçage longitudinal (25) qui est sollicité, pour la déformation plastique de la tête sphérique (11), par un fluide sous pression liquide ou gazeux, afin de refouler radialement la matière de la tête sphérique (11).

6. Procédé selon l'une ou l'autre des revendications 4 et 5, **caractérisé en ce que** la tête sphérique (11) est traversée par un ou par le perçage longitudinal (25) dans lequel, pour la déformation plastique de la tête sphérique (11), on introduit un mandrin de matage qui fait refouler radialement la matière de la tête sphérique (11).

7. Procédé selon la revendication 6, **caractérisé en ce que** le perçage longitudinal (25) comprend un ou le dépassement côté intérieur (26) qui est refoulé radialement par le mandrin de matage (27).

8. Procédé selon l'une des revendications 1 à 7, **caractérisé en ce que** la tête sphérique (11) est déformée plastiquement par un tassement axial de la tête sphérique (11).
